# EUROPEAN PATENT SPECIFICATION

(11) **EP 2 860 159 B1**
(45) Date of publication and mention of the grant of the patent: **24.06.2020**
(21) Application number: 14425126.1
(22) Date of filing: 10.10.2014
(51) Int. Cl.: C03B 23/025, C03B 27/04, C03B 27/044

(54) **Method for bending glass sheets and machine for carrying out the method**
Verfahren zum Biegen von Glasscheiben und Vorrichtung zur Ausführung des Verfahrens
Procédé de bombage de feuilles de verre et machine pour exécuter le procédé

(30) Priority: 14.10.2013 IT VI20130252
(43) Date of publication of application: 15.04.2015
(73) Proprietor: Sfera S.R.L., 30020 Meolo (VE) (IT)
(72) Inventor: Vianello, Elio, 30020 Meolo (VE) (IT)
(74) Representative: Santi, Filippo

(56) References cited:
- EP-A2- 0 273 883
- GB-A- 1 212 208
- JP-A- S5 585 429
- US-A- 4 081 263
- US-A1- 2012 131 961

## Description

The present invention generally relates to a method for bending glass sheets, as well as a machine able to provide said method.

More particularly, the invention relates to a method of bending and thermal tempering of glass sheets, which have a bend angle variable between 1 and 100° and a radius of curvature between 10 and 40 mm; the glass sheets can be made of soda-lime silicate and can be produced of various types, such as clear float glass sheets, extra clear glass sheets, with a low emissive power, frosted glass sheets, etched glass sheets, screen-printed glass sheets, sandblasted glass sheets, etc., and may have a thickness between 4 and 12 mm.

Currently, glass sheets of variable thickness between 4 and 12 mm and having a bending angle of between 50 and 100° are all non-hardened glass sheets.

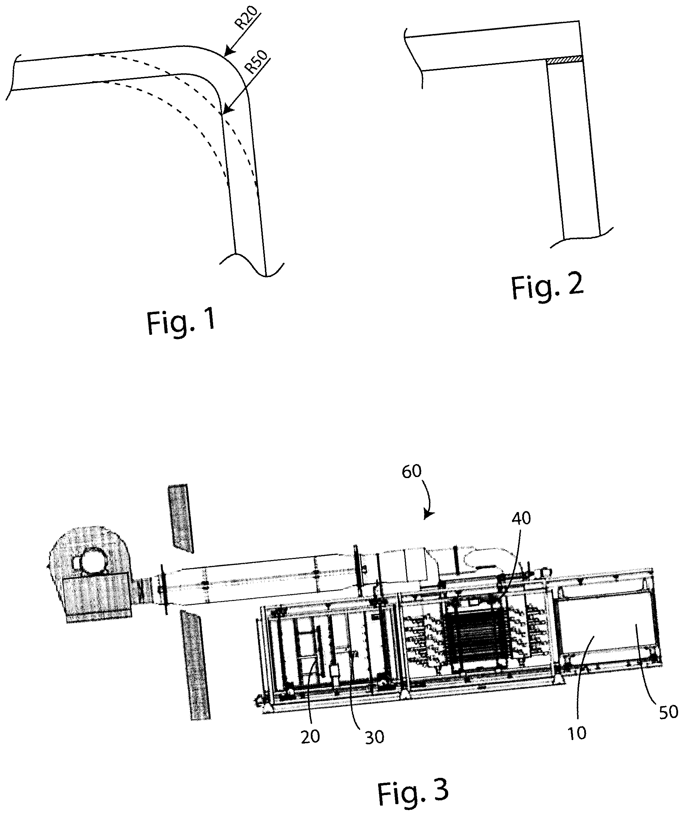

The hardened glass sheets having a bend angle of between 50 and 100° (and, in particular, equal to 90°) are only made by linking and specially by gluing two flat glass sheets (as shown in the enclosed figure 2); alternatively, it is possible to make hardened bent glass sheets having a given bend angle only if the bending has a minimum internal radius of curvature of at least 50/60 mm (as shown in the enclosed figure 1, where the internal radius of curvature of 50/60 mm is indicated with R50 and is sketched with a dotted line). On the other hand, however, in addition to a better aesthetic appearance due to the fluency of the sheet (for example, when the glass sheet is used in a counter exhibition), a glass sheet having a bend angle with a "narrow" radius of curvature (i.e. between 10 and 40 mm, as shown in continuous line and as indicated with R20 in the enclosed figure 1) provides a greater support plane, with respect to a glass sheet having a radius of curvature greater than 50 mm and equal dimensions.

Moreover, since a glass sheet which is bent at 90° is still made with two glass slabs glued together, it is clear the advantage of being able to use a single sheet, which provides greater mechanical strength, cleaning easiness and low growing of bacteria that can creep into the gaps at the bonding between the slabs.

Finally, as in some applications of the glass sheets, such as bathroom furniture, display stands, lighting, electrical appliances, tanks and construction, is compulsorily provided the use of thermal tempering safety glasses (i.e. glasses that must break into several fragments having generally bevelled edges), said type of hardened and monolithic glass sheets having a bending variable between 1 and 100° can be advantageously also used for said applications.

A method for making glass sheets is known from EP0273883; especially, EP0273883 discloses a glass sheet placed on an articulated mold whereby portions of said sheet are not supported, i.e. overheating or cantilevered with respect to the mold.

Moreover, US4081263 discloses a method for bending glass sheets, wherein the leaves of the glass sheet are heated by heating means so as to reduce the temperature gradient between the bending line and the leaves in order to avoid a thermal shock; however, US4081263 explicitly mentions that the object of the invention is to provide a method of bending glass sheets in which the curvature is not directly linked to the shape of a mold or framework and where stirrups are suitable to apply bending force on the glass sheet when heated.

Finally, US2012/131961 discloses a bending process for glass sheets able to sharp bending angles by utilizing a linear resistance-type heater for localized heating of the bending area.

A main object of the present invention is to overcome the drawbacks of the prior art and in particular to provide a method for bending glass sheets, which allows to obtain a monolithic hardened bent slab having a bending angle variable between 1 and 100° and a radius of curvature between 10 and 40 mm.

Another object of the present invention is to provide a glass sheet by using the above mentioned method, so as to use the glass sheet as a display counter and, more generally, as a supporting plane.

Another object of the present invention is to provide a monolithic hardened glass sheet having a bending angle variable between 1 and 100° and a radius of curvature comprised between 10 and 40 mm.

A further object of the present invention is to provide a curved and monolithic sheet glass, which is less bulky with respect to the known glass sheets, with the same dimensions of the supporting plane, and which has a higher mechanical strength, thus facilitating the cleaning operations and the elimination of bacteria or other pathogens.

The above mentioned objects and other objects, which will be more clear in the following, are obtained according to the invention by a method for bending glass sheets according to the appended claim 1 and by means of a machine able to provide the above method according to the appended claim 8.

Other technical details are also given in the dependent claims.

Advantageously, the production process according to the present invention provide for a thermal tempering of a monolithic glass sheet, of a thickness between 4 and 12 mm, which is bent according to a predetermined bending angle of between 1 and 100° and to an inner radius of curvature, which is prefixed and in any case comprised between 10 and 40 mm.

Said glass sheets are advantageously used, for example, in bathroom furnishing, display counters (specially food display counters), lighting and buildings in general, as well as for household appliances and/or aquariums.

The above mentioned objects and other objects and advantages will be more clear from the following description, relating to an exemplifying and preferred embodiment of the method for bending glass sheets, which is the object of the present invention, and from the appended drawings, in which:
- figure 1 is a schematic section view of a portion of a glass sheet having a bending angle, which is made both according to the prior art (dashed line) and according to the present invention (continuous line);
- figure 2 is a schematic section view of a portion of a glass sheet having a bending angle, which is made by means of two slabs glued together, according to the prior art;
- figure 3 is a schematic section view of a machine for making the glass sheet according to the method of the invention;
- figure 4 shows a front view of an enlarged portion of the machine shown in figure 3, according to the present invention;
- figure 4A shows an enlarged detail of figure 4, according to the present invention;
- figure 5 shows a front view of a further enlarged portion of the machine of figure 3, according to the present invention.

With particular reference to the above mentioned figures 3, 4, 4A and 5, the method for bending tempered glass sheets, according to the present invention, uses, as a starting material, a glass plate or sheet or slab, preferably made of sodium-calcium silicate, which is previously processed according to the desired type and shape.

In particular, the sheet or slab has a thickness of preferably from 4 to 12 mm and can have a clear float glass, extra clear glass, low-e glass, frosted glass, etched glass, screen printed glass, sandblasted glass, etc., as well as specific processes, such as holes, cracks, nicks, grinding, and so on.

The glass sheet 5 is positioned vertically or inclined of about 70° (maximum) with respect to the vertical axis, on a metallic support (the mold 4), which is placed inside a tempering machine 60 (fig. 3), the shape of which reproduces the final geometry of the sheet with the bending angle to be made.

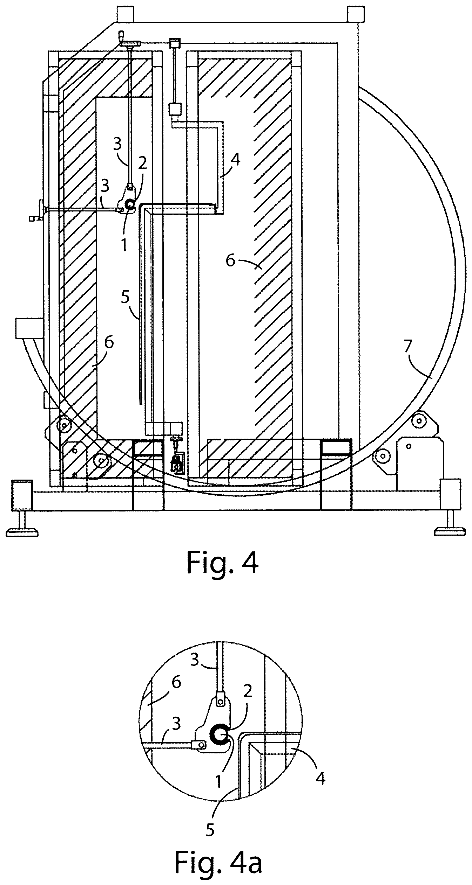

The support or mold 4 supports the glass sheet 5 on its perimeter, leaving an overhanging portion of the same which corresponds to the part to be bent (as shown in the enclosed fig. 4).

The mold 4 is also connected to a shuttle 10 (fig. 3), which carries the entire structure, equipped with the glass sheet, within a heating chamber 6 of a furnace of the machine 60, which is pre-heated to a temperature greater than 500°C and preferably between 620°C and 720°C; a temperature control is entrusted thanks to special thermocouples, while the values of the above mentioned temperature can be set from outside via a digital control panel.

Furthermore, the chamber 6 is composed of two symmetrical halves, which can be automatically opened when the glass sheet 5 is in proximity of the chamber 6 (fig. 4).

The glass sheet 5 is heated both by convection and by radiation inside the chamber 6, by means of heating bodies, which are preferably constituted by electrical resistors with variable power; furthermore, an additional heating body is placed at the curvature of the glass sheet 5, so as to locally increase the temperature of the glass and achieve the curvature of the sheet 5 with a "tight" radius.

Said additional heating body preferably includes an electrical resistance, indicated with 1 in the attached figures, which is contained inside a casing 2, said casing 2 being made of a ceramic material resistant to high temperatures (a material called "MOLITE®" is preferably used) and previously shaped so as to escape the heat through a slot of a predetermined width.

The additional heating body is powered for a given time so as to achieve the desired curvature, by means of a timer, while the electric power of the electric heater 1 can be varied, via a power regulator, between 3 and 8 kW for each meter of the glass sheet.

Also, the position of the electrical resistance 1 can be varied with respect to the glass sheet 5, via the adjustment screws 3, and this adjustment is done through the use of a movable carriage 20, so as to vary the radius of curvature of the glass sheet 5 depending on the distance between the electrical resistance 1 and the above glass sheet 5; in practice, the smaller said distance, the smaller the radius of curvature of the glass sheet 5 (said distance varies preferably between 10 and 50 mm).

After reaching the required temperature within the chamber 6 to make the suitable curvature of the glass sheet 5 (from 30°C to 100°C higher than the temperature of the glass surface, which is equal to about 530-580°C, on the basis of the plastic state of the glass, and is controlled by means of an optical pyrometer), the entire structure 30 rotates due to the rotating circular platform 7 (which moves making an arc of circumference between 5° and 70°), until the glass sheet 5 has a position so that the force of gravity allows to bend it and laying it on the mold 4.

After the heating phase and obtained the desired curvature (which is visually checked through special peepholes placed in the outer shell of the chamber 6), the glass sheet 5 is conveyed by the shuttle 10 in a rapid cooling zone 40, which allows a surface tensioning (the so-called "thermal quenching"), as defined in the UNI EN 12150-1 ("...glass which was induced a permanent compressive stress on its surface...").

The cooling process occurs by using air emitted from fans and said air contacts the two surfaces of the glass sheet 5.

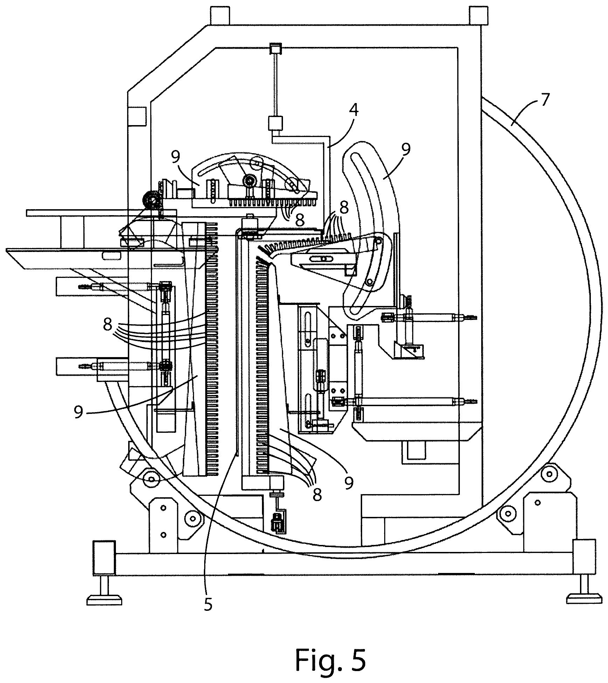

The air is sent to the sheet 5 by means of special nozzles 8, mounted on suitable supports 9 having variable geometry so as to reproduce the geometry of the glass sheet 5, whereas the supports 9 are mounted on respective carriages, so that it is possible to vary the distance between each nozzle 8 and the surface of the glass sheet 5; furthermore, during the cooling phase, the supports 9 rapidly oscillate, in order to cool the whole surface of the glass sheet 5 in the shortest possible time, thus ensuring an extreme uniformity of quenching (fig. 5).

The cooling air for the quenching is sent through an inverter, which is able to control and vary the turns and which is connected to a water gauge for controlling the air pressure; in particular, the pressure varies, depending on the thickness of the glass sheet 5 and on the distance of the nozzles 8 from the surface of the sheet 5, in the following way:

| Sheet thickness | Distance nozzles/sheet | Pressure |
|---|---|---|
| 5 mm | 6-8 cm | 800 mmca |
| 6 mm | 6-8 cm | 500 mmca |
| 8 mm | 8-10 cm | 400 mmca |
| 10 mm | 10-12 cm | 350 mmca |
| 12 mm | 10-12 cm | 280 mmca |

In any case, the values of pressure and distance are indicative, as it may vary depending on the amount of quenching.

Furthermore, after verifying the geometry of the sheet curvature, the processing parameters that are used are stored in a central control unit of the machine 60, in order to obtain the same result for all the glass sheets 5 ("self-learning" process).

After the cooling phase, the shuttle 10 conveys the glass sheet 5 in the discharge zone 50 of the machine 60, in correspondence of which the glass sheet 5 is removed, controlled and packaged.

From the above description, the technical features of the method for bending tempered glass sheets, which is the object of the present invention, are clear as well as clear are the related advantages.

In particular, the innovative concepts regarding the process and the product directly obtained relate to the use of a rotating hardening furnace, together with the use of an additional heating body, which allows a targeted heating of the glass sheet, and the use of a suitable mold, which is interrupted in correspondence of the curvature to be obtained on the sheet.

The curvature and the thermal tempering of the glass sheet is thus obtained and said sheet has a thickness between 4 and 12 mm, with a bending angle ranging between 1° and 100° and a "narrow" radius of curvature (between 10 and 40 mm).

It is finally clear that many other variations can be made to the method for bending glass sheets of the invention, without departing from the principles of novelty inherent in the inventive idea and claimed in the appended claims.

## Claims

1. Method for bending glass sheets (5) **characterized in that** said method comprises at least the following steps:
- placing a glass sheet (5) on a angular support or mold (4), said support (4) being arranged vertically or partially inclined with respect to the vertical axis, so that said support (4) keeps said sheet (5) around its perimeter, leaving a portion of the glass sheet (5), corresponding to a portion of the glass sheet (5) to be bent, which is cantilevered with respect to the support (4);
- moving said support or mold (4) and said glass sheet (5) inside a pre-heated chamber (6) which is heated to a prefixed temperature that is greater than 500°C;
- heating said glass sheet (5), inside said pre-heated chamber (6), by convection and by radiation, by means of heating elements including at least one electric heating device (1), which is placed in correspondence of the bending area of said glass sheet (5) and which is able to locally increase the temperature of said glass sheet (5), said electric heating device (1) being contained within a shaped casing (2) with an opening having a predetermined width for releasing the heat and being made of a material resistant to high temperatures;
- rotating said angular support or mold (4) and said glass sheet (5) when a temperature greater than the temperature of the surface of said glass sheet (5) is obtained inside said chamber (6), so that said glass sheet (5) is bent through the force of gravity and completely rests on said support or mold (4);
- moving the bent glass sheet (5) in a zone (40) for a rapid cooling, so that a surface tension is carried out by sending air, emitted by fans, on the surfaces of said glass sheet (5), said air having a controlled and variable pressure depending on the thickness of said glass sheet (5) and on the distance of the surfaces of said glass sheet (5) from said fans;
- moving said glass sheet (5) in a discharge zone (50), where said glass sheet (5) is removed, controlled and packed.

2. Method as claimed in claim 1, **characterized in that** said pre-heated chamber (6) is composed of two symmetrical halves, which automatically open upon arrival of said glass sheet (5).

3. Method as claimed in claim 2, **characterized in that** said electric heating device (1) has an electrical power which is variable depending on the size of said glass sheet (5) and which is powered for a prefixed time.

4. Method as claimed in claim 1 or 3, **characterized in that** said electric heating device (1) is placed at a distance which is adjustable with respect to said glass sheet (5).

5. Method as claimed in claim 1, **characterized in that** said rotation of said support or mold (4), together with said glass sheet (5), takes place thanks to the rotation, according to a predetermined arc of circumference, preferably between 5° and 70°, of a circular platform (7), which is integral to a structure (30) connected to said support or mold (4) and to said glass sheet (5).

6. Method as claimed in claim 1, **characterized in that** said cooling air is sent to said glass sheet (5) through nozzles (8) mounted on shaped supports (9), which have the geometry of said glass sheet (5) and which are mounted on respective trolleys, so that it is possible to vary the distance between each nozzle (8) and the surface of said glass sheet (5).

7. Method as claimed in claim 6, **characterized in that** said shaped supports (9) of the nozzles (8) rapidly oscillate during the cooling phase, so as to evenly and quickly cool the whole surface of said glass sheet (5).

8. Machine (60) **characterized in that** said machine (60) is able to provide a method for bending glass sheets (5) according to claim 1, the machine comprising:
- an angular support or mold (4) configured to receive a glass sheet (5) thereon, said support (4) being arranged vertically or partially inclined with respect to the vertical axis, so that said support (4) keeps said sheet (5) around its perimeter, leaving a portion of the glass sheet (5), corresponding to a portion of the glass sheet (5) to be bent, which is cantilevered with respect to the support (4);
- a pre-heated chamber (6), which is configured in such a way that said support or mold (4) and said glass sheet(5) are moved therein, inside which is heated to a prefixed temperature that is greater than 500°C;
- heating elements including at least one electric heating device (1) configured to heat said glass sheet (5), inside said pre-heated chamber (6), by convection and by radiation, which is placed in correspondence of the bending area of said glass sheet (5) and which is able to locally increase the temperature of said glass sheet (5), said electric heating device (1) being contained within a shaped casing (2) with an opening having a predetermined width for releasing the heat and being made of a material resistant to high temperatures;
- said angular support or mold (4) and said glass sheet (5) configured to rotate, when a temperature greater than the temperature of the surface of said glass sheet (5) is obtained inside said chamber (6), so that said glass sheet (5) is bent through the force of gravity and completely rests on said support or mold (4);
- a zone (40) configured to receive the bent glass sheet (5) for a rapid cooling, so that a surface tension is carried out by sending air, emitted by fans, on the surfaces of said glass sheet (5), said air having a controlled and variable pressure depending on the thickness of said glass sheet (5) and on the distance of the surfaces of said glass sheet (5) from said fans;
- a discharge zone (50) configured to receive said glass sheet (5), where said glass sheet (5) is removed, controlled and packed.

9. Machine (60) as claimed in claim 8, **characterized in that** said machine (60) includes a central control unit where the processing parameters of said method are stored, in order to perform self-learning phases of the machine (60).

## Patentansprüche

1. Verfahren zum Biegen von Glasscheiben (5), **dadurch gekennzeichnet, dass** das Verfahren mindestens die folgenden Schritte umfasst:
- Platzieren einer Glasscheibe (5) auf einem winkelförmigen Träger oder einer Form (4), wobei der Träger (4) vertikal oder in Bezug auf die vertikale Achse teilweise geneigt angeordnet ist, so, dass der Träger (4) die Scheibe (5) um ihren Umfang herum hält, wobei er einen Abschnitt der Glasscheibe (5), der einem zu biegenden Abschnitt der Glasscheibe (5) entspricht, der in Bezug auf den Träger (4) freitragend ist, freilässt;
- Bewegen des Trägers oder der Form (4) und der Glasscheibe (5) in eine vorerhitzte Kammer (6), die auf eine vorab festgelegte Temperatur erhitzt wird, welche mehr als 500 °C beträgt;
- Erhitzen der Glasscheibe (5) in der vorerhitzten Kammer (6) durch Konvektion und durch Strahlung mittels Heizelementen, die mindestens eine elektrische Heizvorrichtung (1) einschließen, die in Entsprechung zum Biegebereich der Glasscheibe (5) platziert ist und die in der Lage ist, die Temperatur der Glasscheibe (5) örtlich zu erhöhen, wobei die elektrische Heizvorrichtung (1) innerhalb eines geformten Gehäuses (2) mit einer Öffnung enthalten ist, die eine vorbestimmte Breite aufweist, um die Hitze freizusetzen, und die aus einem gegenüber hohen Temperaturen beständigen Material gefertigt ist;
- Drehen des winkelförmigen Trägers oder der Form (4) und der Glasscheibe (5), wenn in der Kammer (6) eine Temperatur erhalten wird, die mehr als die Temperatur der Oberfläche der Glasscheibe (5) beträgt, so, dass die Glasscheibe (5) durch die Schwerkraft gebogen wird und vollständig auf dem Träger oder der Form (4) aufliegt;
- Bewegen der gebogenen Glasscheibe (5) in eine Zone (40) für ein schnelles Abkühlen so, dass eine Oberflächenspannung ausgeführt wird, indem Luft, die von Lüftern abgegeben wird, auf die Oberflächen der Glasscheibe (5) gelenkt wird, wobei die Luft einen kontrollierten und veränderlichen Druck aufweist, der von der Dicke der Glasscheibe (5) und vom Abstand der Oberflächen der Glasscheibe (5) zu den Lüftern abhängt;
- Bewegen der Glasscheibe (5) in eine Abladezone (50), in der die Glasscheibe (5) abgenommen, kontrolliert und verpackt wird.

2. Verfahren nach Anspruch 1, **dadurch gekennzeichnet, dass** sich die vorerhitzte Kammer (6) aus zwei symmetrischen Hälften zusammensetzt, die sich bei Eintreffen der Glasscheibe (5) automatisch öffnen.

3. Verfahren nach Anspruch 2, **dadurch gekennzeichnet, dass** die elektrische Heizvorrichtung (1) eine elektrische Leistung aufweist, die abhängig von der Größe der Glasscheibe (5) veränderlich ist, und die für eine vorab festgelegte Zeit aktiviert wird.

4. Verfahren nach Anspruch 1 oder 3, **dadurch gekennzeichnet, dass** die elektrische Heizvorrichtung (1) in einem Abstand platziert ist, der in Bezug auf die Glasscheibe (5) angepasst werden kann.

5. Verfahren nach Anspruch 1, **dadurch gekennzeichnet, dass** das Drehen des Trägers oder der Form (4) zusammen mit der Glasscheibe (5) dank der Drehung gemäß eines vorbestimmten Kreisbogens, vorzugsweise zwischen 5° und 70°, einer kreisrunden Plattform (7) erfolgt, welche mit einer Struktur (30), die mit dem Träger oder der Form (4) und der Glasscheibe (5) verbunden ist, einstückig ist.

6. Verfahren nach Anspruch 1, **dadurch gekennzeichnet, dass** die Kühlluft durch Düsen (8) auf die Glasscheibe (5) gelenkt wird, die an geformten Trägern (9) angebracht sind, die die Geometrie der Glasscheibe (5) aufweisen und die an jeweiligen Schlitten angebracht sind, sodass es möglich ist, den Abstand zwischen jeder Düse (8) und der Oberfläche der Glasscheibe (5) zu verändern.

7. Verfahren nach Anspruch 6, **dadurch gekennzeichnet, dass** die geformten Träger (9) der Düsen (8) während der Kühlphase schnell schwingen, um die gesamte Oberfläche der Glasscheibe (5) gleichmäßig und schnell abzukühlen.

8. Maschine (60), **dadurch gekennzeichnet, dass** die Maschine (60) in der Lage ist, ein Verfahren zum Biegen von Glasscheiben (5) nach Anspruch 1 bereitzustellen, wobei die Maschine umfasst:
- einen winkelförmigen Träger oder eine Form (4), der/die dazu konfiguriert ist, eine Glasscheibe (5) so auf dem-/derselben aufzunehmen, wobei der Träger (4) vertikal oder in Bezug auf die vertikale Achse teilweise geneigt angeordnet ist, dass der Träger (4) die Scheibe (5) um ihren Umfang herum hält, wobei er einen Abschnitt der Glasscheibe (5), der einem zu biegenden Abschnitt der Glasscheibe (5) entspricht, der in Bezug auf den Träger (4) freitragend ist, freilässt;
- eine vorerhitzte Kammer (6), die in einer derartigen Weise konfiguriert ist, dass der Träger oder die Form (4) und die Glasscheibe (5) in dieselbe bewegt werden, deren Innenraum auf eine vorab festgelegte Temperatur erhitzt wird, welche mehr als 500 °C beträgt;
- Heizelemente, die mindestens eine elektrische Heizvorrichtung (1) einschließen, die dazu konfiguriert ist, die Glasscheibe (5) in der vorerhitzten Kammer (6) durch Konvektion und durch Strahlung zu erhitzen, die in Entsprechung zum Biegebereich der Glasscheibe (5) platziert ist und die in der Lage ist, die Temperatur der Glasscheibe (5) örtlich zu erhöhen, wobei die elektrische Heizvorrichtung (1) innerhalb eines geformten Gehäuses (2) mit einer Öffnung enthalten ist, die eine vorbestimmte Breite aufweist, um die Hitze freizusetzen, und die aus einem gegenüber hohen Temperaturen beständigen Material gefertigt ist;
- wobei der winkelförmige Träger oder die Form (4) und die Glasscheibe (5) dazu konfiguriert sind, wenn in der Kammer (6) eine Temperatur erhalten wird, die mehr als die Temperatur der Oberfläche der Glasscheibe (5) beträgt, so zu drehen, dass die Glasscheibe (5) durch die Schwerkraft gebogen wird und vollständig auf dem Träger oder der Form (4) aufliegt;
- eine Zone (40), die dazu konfiguriert ist, die gebogene Glasscheibe (5) für ein schnelles Abkühlen so aufzunehmen, dass eine Oberflächenspannung ausgeführt wird, indem Luft, die von Lüftern abgegeben wird, auf die Oberflächen der Glasscheibe (5) gelenkt wird, wobei die Luft einen kontrollierten und veränderlichen Druck aufweist, der von der Dicke der Glasscheibe (5) und vom Abstand der Oberflächen der Glasscheibe (5) zu den Lüftern abhängt;
- eine Abladezone (50), die dazu konfiguriert ist, die Glasscheibe (5) aufzunehmen, in der die Glasscheibe (5) abgenommen, kontrolliert und verpackt wird.

9. Maschine (60) nach Anspruch 8, **dadurch gekennzeichnet, dass** die Maschine (60) eine zentrale Steuereinheit einschließt, in der die Verarbeitungsparameter des Verfahrens gespeichert werden, um Selbstlernphasen der Maschine (60) durchzuführen.

## Revendications

1. Procédé de bombage de feuilles de verre (5) **caractérisé en ce que** ledit procédé comprend au moins les étapes suivantes :
- mise en place d'une feuille de verre (5) sur un support ou moule angulaire (4), ledit support (4) étant agencé verticalement ou partiellement incliné par rapport à l'axe vertical, de sorte que ledit support (4) maintient ladite feuille (5) autour de son périmètre, laissant une partie de la feuille de verre (5), correspondant à une partie de la feuille de verre (5) destinée à être bombée, qui est en porte-à-faux par rapport au support (4) ;
- amenée dudit support ou moule (4) et de ladite feuille de verre (5) à l'intérieur d'une chambre préchauffée (6) qui a été chauffée à une température préalablement fixée qui est supérieure à 500 °C ;
- chauffage de ladite feuille de verre (5), à l'intérieur de ladite chambre préchauffée (6), par convection et par rayonnement, au moyen d'éléments chauffants incluant au moins un dispositif de chauffage électrique (1), qui est placé de manière à correspondre avec la zone de bombage de ladite feuille de verre (5) et qui est apte à augmenter localement la température de ladite feuille de verre (5), ledit dispositif de chauffage électrique (1) étant contenu dans un carter profilé (2) avec une ouverture dotée d'une largeur prédéterminée pour évacuer la chaleur et étant constitué d'un matériau résistant à des températures élevées ;
- rotation dudit support ou moule angulaire (4) et de ladite feuille de verre (5) lorsqu'une température supérieure à la température de la surface de ladite feuille de verre (5) est obtenue à l'intérieur de ladite chambre (6), de sorte que ladite feuille de verre (5) est bombée au travers de la force de gravité et repose complètement sur ledit support ou moule (4) ;
- amenée de la feuille de verre bombée (5) dans une zone (40) pour un refroidissement rapide, de sorte qu'une tension de surface est réalisée en envoyant de l'air, émis par des ventilateurs, sur les surfaces de ladite feuille de verre (5), ledit air ayant une pression contrôlée et variable en fonction de l'épaisseur de ladite feuille de verre (5) et de la distance des surfaces de ladite feuille de verre (5) par rapport auxdits ventilateurs ;
- amenée de ladite feuille de verre (5) dans une zone de décharge (50), où ladite feuille de verre (5) est retirée, contrôlée et emballée.

2. Procédé selon la revendication 1, **caractérisé en ce que** ladite chambre préchauffée (6) est composée de deux moitiés symétriques qui s'ouvrent automatiquement à l'arrivée de ladite feuille de verre (5).

3. Procédé selon la revendication 2, **caractérisé en ce que** ledit dispositif de chauffage électrique (1) a une puissance électrique qui est variable en fonction de la taille de ladite feuille de verre (5) et qui est alimentée pendant une durée préalablement fixée.

4. Procédé selon les revendications 1 ou 3, **caractérisé en ce que** ledit dispositif de chauffage électrique (1) est placé à une distance qui est réglable par rapport à ladite feuille de verre (5).

5. Procédé selon la revendication 1, **caractérisé en ce que** ladite rotation dudit support ou moule (4), conjointement avec ladite feuille de verre (5), se produit grâce à la rotation, selon un arc de circonférence prédéterminé, de préférence entre 5° et 70°, d'une plateforme circulaire (7) qui est solidaire d'une structure (30) reliée audit support ou moule (4) et à ladite feuille de verre (5).

6. Procédé selon la revendication 1, **caractérisé en ce que** ledit air de refroidissement est envoyé vers ladite feuille de verre (5) au travers de buses (8) montées sur des supports profilés (9) qui ont la géométrie de ladite feuille de verre (5) et qui sont montés sur des chariots respectifs, de sorte qu'il est possible de faire varier la distance entre chaque buse (8) et la surface de ladite feuille de verre (5).

7. Procédé selon la revendication 6, **caractérisé en ce que** lesdits supports profilés (9) des buses (8) oscillent rapidement durant la phase de refroidissement, de manière à refroidir de manière uniforme et rapide toute la surface de ladite feuille de verre (5).

8. Machine (60) **caractérisée en ce que** ladite machine (60) est apte à fournir un procédé de bombage de feuilles de verre (5) selon la revendication 1, la machine comprenant :
- un support ou moule angulaire (4) configuré pour recevoir une feuille de verre (5) sur celui-ci, ledit support (4) étant agencé verticalement ou partiellement incliné par rapport à l'axe vertical, de sorte que ledit support (4) maintient ladite feuille (5) autour de son périmètre, laissant une partie de la feuille de verre (5), correspondant à une partie de la feuille de verre (5) destinée à être bombée, qui est en porte-à-faux par rapport au support (4) ;
- une chambre préchauffée (6), qui est configurée de telle manière que ledit support ou moule (4) et ladite feuille de verre (5) sont transférées dans celle-ci et qui a été chauffée à l'intérieur à une température préalablement fixée qui est supérieure à 500 °C ;
- des éléments chauffants incluant au moins un dispositif de chauffage électrique (1) configuré pour chauffer ladite feuille de verre (5), à l'intérieur de ladite chambre préchauffée (6), par convection et par rayonnement, qui est placé de manière à correspondre avec la zone de bombage de ladite feuille de verre (5) et qui est apte à augmenter localement la température de ladite feuille de verre (5), ledit dispositif de chauffage électrique (1) étant contenu dans un carter profilé (2) avec une ouverture dotée d'une largeur prédéterminée pour évacuer la chaleur et étant constitué d'un matériau résistant à des températures élevées ;
- ledit support ou moule angulaire (4) et ladite feuille de verre (5) configurés pour tourner, lorsqu'une température supérieure à la température de la surface de ladite feuille de verre (5) est obtenue à l'intérieur de ladite chambre (6), de sorte que ladite feuille de verre (5) est bombée au travers de la force de gravité et repose complètement sur ledit support ou moule (4) ;
- une zone (40) configurée pour recevoir la feuille de verre bombée (5) pour un refroidissement rapide, de sorte qu'une tension de surface est réalisée en envoyant de l'air, émis par des ventilateurs, sur les surfaces de ladite feuille de verre (5), ledit air ayant une pression contrôlée et variable en fonction de l'épaisseur de ladite feuille de verre (5) et de la distance des surfaces de ladite feuille de verre (5) par rapport auxdits ventilateurs ;
- une zone de décharge (50) pour recevoir ladite feuille de verre (5), où ladite feuille de verre (5) est retirée, contrôlée et emballée.

9. Machine (60) selon la revendication 8, **caractérisée en ce que** ladite machine (60) inclut une unité centrale de commande où les paramètres de traitement dudit procédé sont stockés, afin d'effectuer des phases d'auto-apprentissage de la machine (60).
